# EUROPÄISCHE PATENTANMELDUNG

(11) **EP 1 642 490 A1**
(43) Veröffentlichungstag der Anmeldung: **05.04.2006**
(21) Anmeldenummer: 05108872.2
(22) Anmeldetag: 26.09.2005
(51) Int. Cl.: A01F 12/40

(54) **Rotor für einen Strohhäcksler**

(30) Priorität: 02.10.2004 DE 102004048115
(71) Anmelder: DEERE & COMPANY, Moline, Illinois 61265-8098 (US)
(72) Erfinder: Lauer, Fritz, 66894, Krähenberg (DE)
(74) Vertreter: Holst, Sönke

(57) **Zusammenfassung**

Die Erfindung bezieht sich auf einen Rotor für einen Strohhäcksler (42), mit einem Rotorkörper (44), einer am Rotorkörper (44) angeordneten Konsole (60), wenigstens einem an der Konsole (60) mit einem Befestigungselement (64) abnehmbar und pendelnd aufgehängten Messer (46) und mit einem durch das Befestigungselement (64) lösbar mit der Konsole (60) verbundenen Luftschaufelelement (68).

Es wird vorgeschlagen, dass das Luftschaufelelement (68) starr befestigt ist.

## Beschreibung

Die Erfindung betrifft einen Rotor für einen Strohhäcksler, mit einem Rotorkörper, einer am Rotorkörper angeordneten Konsole, wenigstens einem an der Konsole mit einem Befestigungselement abnehmbar und pendelnd aufgehängten Messer und mit einem durch das Befestigungselement mit der Konsole verbundenen Luftschaufelelement.

Strohhäcksler an Mähdreschern werden derzeit in der Regel mit einem Rotor mit pendelnd aufgehängten Messern bestückt. Die Messer rotieren mit hoher Geschwindigkeit und treten in Zwischenräume ein, die durch feststehende Gegenmesser definiert werden. Das geförderte und gehäckselte Material, bei dem es sich um Stroh oder Spreu oder ein Gemisch daraus handeln kann, wird durch die rotierenden Messer nach dem Schnitt aus dem Gehäuse des Strohhäckslers gefördert. Es trifft dann auf stromab des Strohhäckslers angeordnete Leitbleche, die das Material in seitlicher Richtung ablenken, damit es über einen möglichst hohen Anteil der Schnittbreite des Mähdreschers verteilt wird.

Mähdrescher werden derzeit mit immer größeren Schnittbreiten ausgestattet, die es immer schwieriger machen, mit einem derartigen Häckslerrotor das Material über die Schnittbreite des Mähdreschers zu verteilen.

Es wurden einige Vorschläge gemacht, durch Erzeugung eines Luftstroms die Wurfweite zu vergrößern, indem man die eigentlichen Messer mit Flächen zur Erzeugung eines Luftstroms versieht, der das Häckselmaterial mitfördert. Im Einzelnen wurden starr am Rotor befestige Messer mit rückseitigen, sich in Achsrichtung des Rotors erstreckenden Platten (US 3 103 241 A), pendelnd aufgehängte Messer mit derartigen Platten (US 3 717 062 A, US 5 232 405 A, US 5 482 508 A), in sich tordierte, pendelnde Messer (US 6 511 374 B), sich in Achsrichtung des Rotors erstreckende und dort starr befestigte, plattenförmige Messer (DE 197 49 338 A) sowie pendelnd aufgehängte U-förmige Messer mit einem sich in Achsrichtung des Rotors erstreckenden Schenkel (DE 101 07 776 A) vorgeschlagen. Ein Nachteil der Messer mit daran befestigten bzw. integrierten Luftschaufelflächen (US 3 103 241 A, US 3 717 062 A, US 5 232 405 A, US 5 482 508 A und DE 101 07 776 A) liegt darin, dass sie sich nicht umdrehen lassen, nachdem ihre Schneidkanten abgenutzt sind, weil dann die zum Luftschaufeln dienenden Flächen an die vorlaufende Seite kommen, was zu einem nicht zufrieden stellenden Schneidverhalten führt. Die Messer nach US 6 511 374 B sind aufwändig in der Herstellung und die nach DE 197 49 338 A erfordern einen hohen Antriebsleistungsbedarf. Es wäre demnach wünschenswert, die bekannten, flachen Messer beizubehalten und andere Flächen zur Bereitstellung eines Luftstroms zu verwenden.

Die DE 39 25 701 C beschreibt einen Strohhäcksler, bei dem im Abstandsraum zwischen benachbarten Häckselmessern ein Luftschaufelblech frei drehbar an einem mit der Häckslerwelle fest verbundenen Halter gelagert ist. Die pendelnde Lagerung erlaubt es, eine Strohleitklappe beim Schwadablagebetrieb in eine Position zu verbringen, in der der Häcksler abgedeckt ist. Sie hat aber auch zum Nachteil, dass das Luftschaufelblech im Betrieb entgegen dem Luftdruck ausweicht und somit nur eine geringe Wirkung entfaltet.

Schließlich wurden Strohhäcksler mit relativ breit bauenden Halterungen für die Häckslermesser versehen (US 3 717 062 A, US 6 692 351 B). Diese mögen eine gewisse Luftschaufelwirkung entfalten, sie sind jedoch mit dem Rotor verschweißt und im Schadensfall nur schwierig austauschbar. Außerdem können sie nicht demontiert werden, falls für besondere Anwendungsfälle nur eine geringe Reichweite des Strohhäckslers gewünscht wird.

Die der Erfindung zu Grunde liegende Aufgabe wird darin gesehen, einen Häckslerrotor bereitzustellen, der durch geeignete Luftschaufelelemente eine befriedigende Reichweite des Häckselgutes ermöglicht und bei dem die Luftschaufelelemente bei Bedarf leicht austauschbar oder entfernbar sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Rotor eines Strohhäckslers umfasst einen zylindrischen Rotorkörper, der im Betrieb um seine Längsachse in Drehung versetzt wird. Auf dem Rotorkörper sind eine Anzahl an Konsolen angeordnet, die zur Befestigung von pendelnd gelagerten, an sich bekannten Messern dienen. Die Messer sind an ihren vorlaufenden und in der Regel auch an den nachlaufenden Stirnseiten mit Schneidkanten versehen und laufen vorzugsweise zwischen stationären Gegenmessern hindurch, um das Häckselmaterial zu zerkleinern. Die Messer sind durch Befestigungselemente lösbar an der Konsole befestigt. Die Befestigungselemente dienen auch zur lösbaren Fixierung eines Luftschaufelelements an der Konsole. Es wird vorgeschlagen, das Luftschaufelelement nicht pendelnd, sondern starr am Rotor zu befestigen.

Auf diese Weise erreicht man eine gute Luftförderung und eine hohe Reichweite des Strohhäckslers, da das Luftschaufelelement nicht entgegen dem Luftdruck ausweichen kann. Es kann einfach und schnell demontiert werden, falls man es nicht benötigt, bzw. im Verschleißfall ausgetauscht werden.

Es bietet sich an, die dem Rotor zugewandte Fläche des Luftschaufelelements komplementär zur Form des Rotors, d. h. im Wesentlichen konkav zu formen, um durch Formschluss die starre Befestigung des Luftschaufelelementes am Rotor zu erzielen. Alternativ oder zusätzlich kann das Befestigungselement drehfest mit der Konsole verbunden sein, und das Luftschaufelelement ebenfalls drehfest mit dem Befestigungselement. Dazu kann eine geschlitzte Schraube verwendet werden, in deren Schlitz überstehende Elemente der Konsole und des Luftschaufelelements eingreifen.

Bei vielen Anwendungsfällen ist es sinnvoll, an beiden Seiten einer Konsole ein Luftschaufelelement anzubringen. Um möglichst wenig unterschiedliche Teile herstellen und lagern zu müssen, erweist es sich als sinnvoll, das Luftschaufelelement achsensymmetrisch zu gestalten. Ein Luftschaufelelement kann somit um 180° gedreht und auf der jeweils anderen Seite der Konsole angebracht werden. Im Verschleißfall können die vornehmlich an der vorlaufenden Fläche abnutzenden Luftschaufelelemente auf beiden Seiten der Konsole untereinander ausgetauscht werden. Ein geeigneter Querschnitt wäre U-förmig, wobei der mittlere Schenkel mit dem Befestigungselement zusammenwirkt.

Abhängig von der gewünschten Luftschaufelwirkung können alle Konsolen eines Rotors mit erfindungsgemäßen Luftschaufelelementen ausgestattet werden, oder nur ein Teil von ihnen. Sind die Konsolen in mehreren Reihen angeordnet, könnte nur ein Teil der Reihen mit den Luftschaufelelementen ausgestattet werden. Es kann sich auch als sinnvoll erweisen, nur äußere Konsolen mit Luftschaufelelementen zu versehen, da das dort geförderte Material besonders weit zur Seite auszuwerfen ist, während die inneren Konsolen keine Luftschaufelelemente benötigen, da das dort auszuwerfende Material nicht weit zur Seite gefördert werden soll. Dadurch kann Energie zum Antrieb des Rotors eingespart werden.

In den Zeichnungen ist ein nachfolgend näher beschriebenes Ausführungsbeispiel der Erfindung dargestellt. Es zeigt:
- Fig. 1: einen Mähdrescher mit einem Strohhäcksler;
- Fig. 2: eine perspektivische Ansicht des Rotors des Strohhäckslers mit Luftschaufelelementen, und
- Fig. 3: eine perspektivische Explosionszeichnung der Befestigung der Luftschaufelelemente und der Messer an einer Konsole des Rotors des Strohhäckslers.

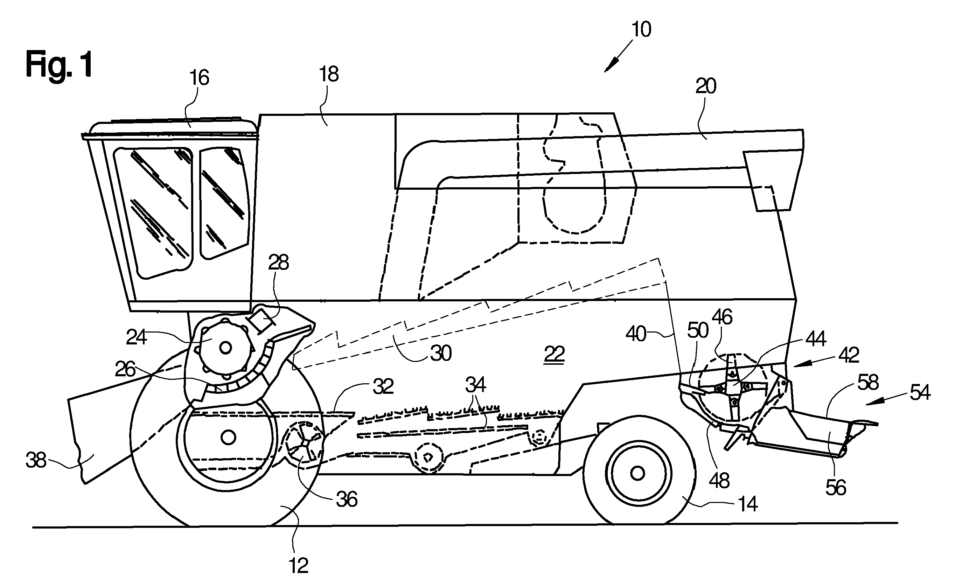

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden oder in den Einlass des Strohhäckslers 42 geblasen oder durch einen separaten Förderer dorthin verbracht werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 setzt sich aus einem Gehäuse 48 und einem darin angeordneten Rotor zusammen, der einen hohlzylindrischen Rotorkörper 44 und um seinen Umfang und über seine Länge verteilte, pendelnd aufgehängte Messer 46 umfasst. Der Rotorkörper 44 ist mit einem Antrieb derart verbunden, dass er in dem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Strohleitbleche 56 umfasst, welche unterhalb einer Strohverteilerhaube 58 angeordnet sind.

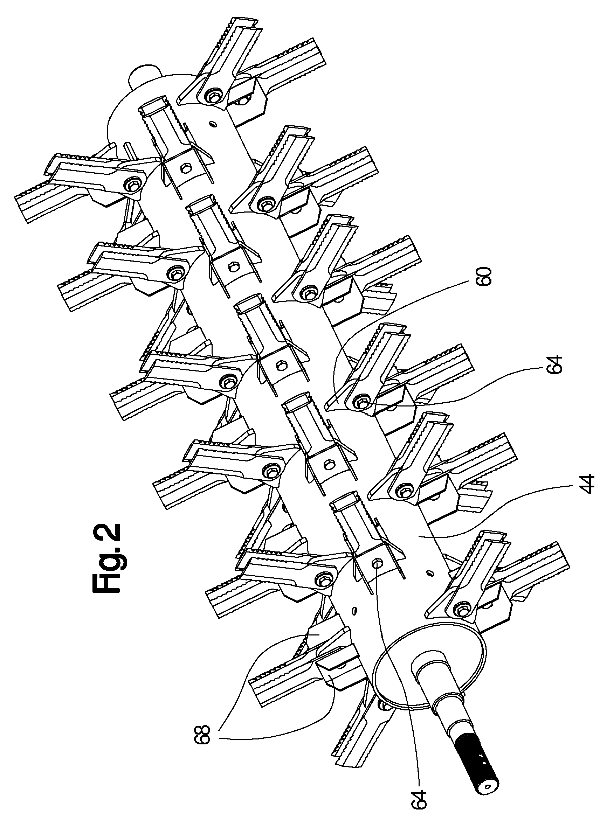

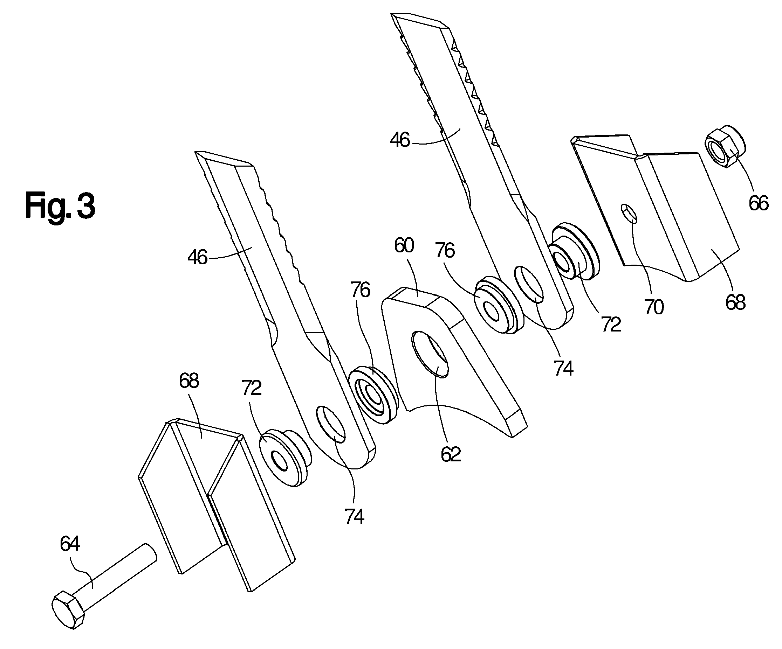

Die Figur 2 zeigt den Rotor mit dem Rotorkörper 44 und den daran angebrachten Messern 46 in perspektivischer Darstellung. Auf den Rotorkörper 44 sind acht (sich jeweils in Achsrichtung des Rotorkörpers 44 erstreckende) Reihen an Konsolen 60 aufgeschweißt, die mit sich in Achsrichtung des Rotorkörpers 44 erstreckenden Bohrungen 62 versehen sind (s. Figur 3). Durch jede der Bohrungen 62 erstreckt sich jeweils ein Befestigungselement 64 in Form einer Schraube, die durch eine Mutter 66 gesichert ist.

Das Befestigungselement 64 dient bei den Konsolen 60 jeder zweiten Reihe auch zur Befestigung von Luftschaufelelementen 68 auf beiden Seiten der Konsolen 60, indem es sich durch entsprechende Löcher 70 in den Luftschaufelelementen 68 erstreckt.

Die Luftschaufelelemente 68 weisen einen U-förmigen Querschnitt auf und haben somit drei Schenkel. Das Loch 70 befindet sich im mittleren Schenkel, so dass die anderen Schenkel sich in Achsrichtung des Rotorkörpers 44 erstrecken. Die Außenkanten der anderen Schenkel sind vom mittleren Schenkel ausgehend zum äußeren Ende hin geringfügig abgeschrägt. Die am Rotorkörper 44 anliegende Fläche des mittleren Schenkels der Luftschaufelelemente 68 ist abgerundet, so dass sich nur ein geringer oder kein Spalt zwischen den Luftschaufelelementen 68 und dem Rotorkörper 44 ergibt. Auf diese Weise erreicht man, dass die Luftschaufelelemente 68 starr - nicht pendelnd - am Rotorkörper 44 befestigt sind. Die Luftschaufelelemente 68 auf beiden Seiten der Konsole 60 sind zur Längsachse des Rotorkörpers 44 symmetrisch und untereinander identisch, so dass nur ein Typ an Luftschaufelelementen 68 herzustellen ist und sie untereinander ausgetauscht werden können.

Die Länge der Luftschaufelelemente 68 ist geringer als die der Messer 46, so dass letztere zwischen den Gegenmessern 50 eintauchen können. Die Luftschaufelelemente 68 wirken daher auch nicht mit dem Häckselmaterial zusammen, sondern fördern nur Luft. Aufgrund ihrer starren Anordnung ist ihre Luftförderwirkung größer als bei pendelnd aufgehängten Luftschaufelelementen.

Die Befestigung der Luftschaufelelemente 68 und der Messer 46 erfolgt, wie bereits erwähnt und in der Figur 3 dargestellt, durch Befestigungselemente 64 in Form einer Schraube, die sich jeweils durch ein Loch in einem Luftschaufelelement 68, eine erste Buchse 72, ein Loch 74 im Messer 46, eine zweite Buchse 76, die Bohrung 62 in der Konsole 60, eine weitere zweite Buchse 76, ein Loch 74 in einem zweiten Messer 46, eine weitere erste Buchse 72, ein Loch 70 in einem weiteren Luftschaufelelement 68 und schließlich die Mutter 66 erstreckt. Die Buchsen 72 erstrecken sich jeweils in ein Loch 74 in einem Messer 46, wobei ein hinreichendes Spiel zur pendelnden Lagerung des Messers 46 verbleibt. Die Buchsen 76 erstrecken sich in die Bohrung 62. Sämtliche in Figur 3 dargestellten Elemente, mit Ausnahme der Luftschaufelelemente 68, werden bei bereits hergestellten Strohhäckslern eingesetzt; lediglich das Befestigungselement 64 ist einige mm länger. Deshalb können die Luftschaufelelemente 68 bei bereits vorhandenen Mähdreschern 10 problemlos nachgerüstet werden.

## Patentansprüche

1. Rotor für einen Strohhäcksler (42), mit einem Rotorkörper (44), einer am Rotorkörper (44) angeordneten Konsole (60), wenigstens einem an der Konsole (60) mit einem Befestigungselement (64) abnehmbar und pendelnd aufgehängten Messer (46) und mit einem durch das Befestigungselement (64) lösbar mit der Konsole (60) verbundenen Luftschaufelelement (68), **dadurch gekennzeichnet, dass** das Luftschaufelelement (68) starr befestigt ist.

2. Rotor nach Anspruch 1, **dadurch gekennzeichnet, dass** das Luftschaufelelement (68) durch Formschluss starr mit dem Rotorkörper (44) verbunden ist.

3. Rotor nach Anspruch 1 oder 2, **dadurch gekennzeichnet, dass** das Luftschaufelelement (68) achsensymmetrisch ist, so dass zwei an beiden Seiten der Konsole (60) angeordnete Luftschaufelelemente (68) untereinander austauschbar sind.

4. Rotor nach einem der Ansprüche 1 bis 3, **dadurch gekennzeichnet, dass** das Luftschaufelelement (68) einen U-förmigen Querschnitt aufweist.

5. Rotor nach Anspruch 4, **dadurch gekennzeichnet, dass** der mittlere Schenkel des Luftschaufelelements (68) mit dem Befestigungselement (64) zusammenwirkt.

6. Rotor nach einem der Ansprüche 1 bis 5, **dadurch gekennzeichnet, dass** er mit mehreren Konsolen (60) ausgestattet ist, von denen nur ein Teil mit einem Luftschaufelelement (68) versehen ist.

7. Mähdrescher mit einem Strohhäcksler (42), der einen Rotor nach einem der vorhergehenden Ansprüche aufweist.
